# EUROPÄISCHE PATENTSCHRIFT

(11) **EP 3 481 575 B1**
(45) Veröffentlichungstag und Bekanntmachung des Hinweises auf die Patenterteilung: **03.06.2020**
(21) Anmeldenummer: 17737721.5
(22) Anmeldetag: 10.07.2017
(51) Int. Cl.: B23F 21/12, B23F 5/16, B23F 5/20, B23F 19/05

(54) **RADFÖRMIGES VERZAHNUNGSWERKZEUG, VERFAHREN ZUR BEARBEITUNG VON VERZAHNUNGEN, VERFAHREN ZUM NACHSCHÄRFEN EINES VERZAHNUNGSWERKZEUGS UND VERZAHNUNGSMASCHINE**
WHEEL-SHAPED GEAR WORKING TOOL, METHOD OF WORKING GEARS, METHOD OF DRESSING GEAR WORKING TOOLS AND GEAR MAKING MACHINE
OUTIL DE COUPE DE ROUES D'ENGRENAGES EN FORME DE ROUE, PROCÉDÉ POUR L'USINAGE DE ROUES D'ENGRENAGES, PROCÉDÉ POUR DRESSER CES OUTILS DE COUPE ET MACHINE À USINER LES ROUES D'ENGRENAGES

(30) Priorität: 11.07.2016 DE 102016008435
(43) Veröffentlichungstag der Anmeldung: 15.05.2019
(73) Patentinhaber: GLEASON-PFAUTER MASCHINENFABRIK GMBH, 71636 Ludwigsburg (DE)
(72) Erfinder: WEPPELMANN, Edgar, 71679 Asperg (DE); NORSELLI, Anthony J., Hilton, New York 14468 (US); MARTIN, Wayne, Roscoe, Illinois 61073 (US)
(74) Vertreter: Leinweber & Zimmermann
(86) Internationale Anmeldenummer: PCT/EP2017/000815
(87) Internationale Veröffentlichungsnummer: WO 2018/010838

(56) Entgegenhaltungen:
- DE-A1-102011 009 027
- DE-A1-102015 106 354
- KLOCKE F ET AL: "HARD GEAR FINISHING WITH A GEOMETRICALLY DEFINED CUTTING EDGE", GEAR TECHNOLOGY, RANDALL PUBLISHING CO. ELK GROVE, ILLINOIS, US, Bd. 16, Nr. 6, 1. November 1999 (1999-11-01), Seiten 24-29, XP000873761, ISSN: 0743-6858

## Beschreibung

Die Erfindung betrifft ein radförmiges Verzahnungswerkzeug, gemäß dem Oberbegriff des unabhängigen Anspruchs 1, insbesondere Schälrad, zur Bearbeitung von Verzahnungen, insbesondere in der Kinematik des Wälzschälverfahrens, mit Schneidzähnen, an deren im Bearbeitungsgriff der zu bearbeitenden Verzahnung zugewandten Seite Schneidkanten vorgesehen sind, sowie ein Verfahren zum Nachschärfen eines Verzahnungswerkzeugs und eine Verzahnungsmaschine.

Derartige Verzahnungswerkzeuge sind gut bekannt, beispielsweise in einer Anwendung des Wälzschälens in DE 10 2011 009 027 A1 offenbart. Des Weiteren sind derartig gestaltete Verzahnungswerkzeuge auch zum Bearbeiten vorverzahnter bereits gehärteter Werkstücke einsetzbar, im sogenannten Hartschälen (siehe Bausch "Innovative Zahnradfertigung", 3. Auflage, S. 408).

DE 10 2015 106 354 A1 offenbart ein Schneidwerkzeug mit Flankenschneidabschnitten, die an den Rändern der Schneidzahnlücken angeordnet sind und jeweils entlang einer Konturlinie, bei der es sich um einen Bogen handelt, verlaufen. Diese sind in Form einer Furche gebildet, die sich entlang des Randes in der Stirnseite erstreckt, und an der anderen Zahnflanke in Form einer Fase, die im Übergangsbereich zur Zahnflanke den entsprechenden Flankenschneidabschnitt ausbildet.

Der Erfindung liegt die Aufgabe zugrunde, eine Verbesserung der mit derartigen Verzahnungswerkzeugen durchgeführten Bearbeitungsprozesse zu erreichen, insbesondere unter Berücksichtigung einer aufeinanderfolgenden Bearbeitung mehrerer Werkstücke.

Diese Aufgabe wird durch eine Weiterbildung eines Verzahnungswerkzeugs der oben genannten Art erreicht, die im Wesentlichen dadurch gekennzeichnet ist, dass eine erste Schneidkante eines Schneidzahns durch den Schnitt einer Zahnflanke des Schneidzahns mit einer zu der Spanfläche dieser ersten Schneidkante gehörenden ersten ebenen Fläche gebildet ist, deren Normalenvektor an der ersten Schneidkante sich in seiner Orientierung von der Orientierung des Normalenvektors auf eine zweite ebene Fläche unterscheidet, deren Schnitt mit der anderen Zahnflanke des Schneidzahns eine zweite Schneidkante des Schneidzahns bildet und die zu der Spanfläche der zweiten Schneidkante gehört, wobei der Normalenvektor auf die zweite Fläche an der zweiten Schneidkante im gleichen radialen Abstand von der Drehachse des Verzahnungswerkzeugs ansetzt wie der Normalenvektor auf die erste Fläche.

Bei der erfindungsgemäßen Gestaltung des Verzahnungswerkzeugs gemäß Anspruch 1 ist die Gestaltungsfreiheit für die in Bearbeitungseingriff der jeweiligen Schneidkanten wirksamen Keilwinkeln beim Spanabtrag am Werkstück erhöht. Es können für den Spanabtrag somit in erhöhtem Maße unabhängig voneinander für die Bearbeitung mit der linken und der rechten Schneidkante mit betragsmäßig unterschiedlichen Spanwinkeln gearbeitet werden und z.B. auch beidseitig mit negativen Spanwinkeln gearbeitet werden. Unter einem Normalenvektor (erster Normalenvektor für erste Fläche und zweiter für zweite Fläche) ist der nach außen gerichtete Normalenvektor zu verstehen. Dieser schließt mit dem im gleichen Ansatzpunkt angesetzten äußeren Normalenvektor auf die Zahnflanke einen Winkel ein, der zusammen mit dem Keilwinkel an dieser Stelle 180° beträgt.

Erfindungsgemäß ist die erste Fläche eben ausgebildet und die zweite Fläche ebenfalls eben ausgebildet. Dies liefert Handhabungsvorteile beim Nachschärfen des Verzahnungswerkzeugs nach einer Anzahl von Bearbeitungen, das üblicherweise durch ein Nachschleifen erfolgt.

In einer weiteren besonders bevorzugten Ausgestaltung laufen die beiden Normalenvektoren auseinander. Insbesondere ist/sind der erste und/oder der zweite Normalenvektor, insbesondere beide, von einer Ebene weggerichtet, die durch die Mitte des Schneidzahns verläuft und orthogonal zu einer Verbindungsgeraden zwischen einem Punkt der ersten Schneidkante und einem Punkt der zweiten Schneidkante, wobei diese beiden Punkte den gleichen radialen Abstand von der Drehachse des Verzahnungswerkzeugs haben. Dadurch ergeben sich über größere Keilwinkel negative Spanwinkel an beiden Schneidkanten und es kann eine Verbesserung in der Standzeit des Verzahnungswerkzeugs erreicht werden. Der von den jeweiligen Normalenvektoren und der vorstehend definierten Ebene eingeschlossene Winkel ist dabei bevorzugt im Wesentlichen gleich groß.

Bevorzugt schließen an beiden Zahnkanten die Normalenvektoren an der Zahnkante zwischen jeweiliger Spanfläche (erster/zweiter Fläche) und jeweiliger Zahnflanke einen Winkel von kleiner 90° ein, bevorzugt kleiner 85°, weiter bevorzugt kleiner 80°.

Wenn bei einer Bearbeitung beispielsweise eines vorverzahnten Werkstücks eine Bearbeitung im Fußbereich des Werkstücks nicht erfolgt, genügt es zudem, die wirksamen Schneidkanten, also in dem Bereich des linken und rechten Profils des Werkzeug-Schneidzahnes derart auszubilden, die Zahnspitze des Verzahnungswerkzeugs kommt dann nicht schneidend zum Einsatz.

Bevorzugt ist vorgesehen, dass die beiden wie oben definierten Normalenvektoren einen Winkel von bevorzugt mehr als 20°, weiter bevorzugt mehr als 25°, insbesondere mehr als 30° einschließen, wobei dieser Winkel bevorzugt geringer ist als 70°, weiter bevorzugt geringer ist als 65° und insbesondere geringer ist als 60°. Besonders bevorzugt liegt dieser Winkel im Bereich 45°+-10°.

In einer weiteren bevorzugten Ausführungsform verläuft der erste oder der zweite Normalenvektor parallel zu der Drehachse des Verzahnungswerkzeugs. Dies liefert weitergehende Vorteile beim Nachschärfen des Verzahnungswerkzeugs, da es ermöglicht, Spanflächenbereiche mehrerer Schneidzähne im gleichen Schleifvorgang parallel zu bearbeiten.

Die erfindungsgemäße Gestaltung des Verzahnungswerkzeugs ist für positive, negative wie auch Null betragende Kopfspanwinkel des Schneidzahns einsetzbar, ein Kopfspansamt zu vereinfachen und damit auch die Berechnungen bei der zugehörigen Werkzeugauslegung.

In einer bevorzugten Variante ist das Verzahnungswerkzeug schräg verzahnt, insbesondere mit einem Betrag des Schrägungswinkels von größer 10°, bevorzugt größer 15° und insbesondere kleiner 30°, bevorzugt kleiner 25°. Mit dieser Gestaltung können auch gradverzahnte Werkstücke gut in der Kinematik des Wälzschälverfahrens bearbeitet werden.

In einer besonders bevorzugten Ausführungsform ist vorgesehen, dass ein Winkel zwischen einer Verbindungsgeraden zwischen einem Punkt der ersten Schneidkante und einem Punkt der zweiten Schneidkante, die den gleichen radialen Abstand von der Drehachse des Verzahnungswerkzeugs haben, zur Normalenebene der Drehachse des Verzahnungswerkzeugs einen Winkel einschließt, der um weniger als 10°, insbesondere weniger als 5° von dem Schrägungswinkel abweicht, und insbesondere gleich dem Schrägungswinkel ist.

In einer weiteren zweckmäßigen Gestaltung ist das Verzahnungswerkzeug aus vollem Material gebildet, insbesondere aus Voll-Stahl oder Voll-Hartmetall. Obgleich derartige Werkzeuge beengte Platzverhältnisse zwischen den einzelnen Werkzeugzähnen aufweisen, ist aufgrund der erfindungsgemäßen Weiterbildungen dennoch ein vergleichsweise einfacherer Zugang für das Nachschärfwerkzeug gegeben.

Neben einem Verfahren gemäß Anspruch 9 zur Bearbeitung von Verzahnungen mit einem nach einem der oben erläuterten Aspekte ausgelegten Verzahnungswerkzeug, insbesondere in der Kinematik des Wälzschälens und insbesondere als Bearbeitung von gehärteten, vorverzahnten Werkstücken ist von der Erfindung auch unter Schutz gestellt ein Verfahren gemäß Anspruch 10 zum Nachschärfen eines nach einem der oben erläuterten Aspekte gestalteten Verzahnungswerkzeugs, bei dem von der ersten und zweiten ebenen Fläche insbesondere ohne Änderung von deren jeweiligen Normalenvektor Material abgenommen wird. Dabei ist wiederum die Ausgestaltung der ersten und zweiten Fläche als ebene Fläche vorgesehen, und der Eingriff eines Schleifwerkzeugs zum Nachschärfen kann flächig erfolgen, insbesondere können 10% oder mehr, insbesondere 25% oder mehr oder sogar 40% oder mehr der ersten bzw. zweiten Fläche im gleichzeitigen flächigen Bearbeitungseingriff mit dem Schleifwerkzeug stehen.

Des Weiteren ist von der Erfindung unter Schutz gestellt eine Verzahnungsmaschine gemäß Anspruch 11 zur Bearbeitung von Verzahnungen, mit einer Werkstückaufnahme zur Aufnahme eines Werkstücks für die Verzahnungsbearbeitung und einer drehbar antreibbaren Werkzeugaufnahme, die ein nach einem der oben erläuterten Aspekte gestaltetes Verzahnungswerkzeug trägt. Die Verzahnungsmaschine weist bevorzugt eine Vorrichtung zum Einmitten/Einzentrieren auf, beispielsweise einen berührungslosen Sensor.

Weitere Einzelheiten, Merkmale und Vorteile der Erfindung ergeben sich aus der nachfolgenden Beschreibung mit Bezug auf die beigefügten Figuren, von denen
Fig. 1 eine Draufsicht auf die Spanflächen eines Schälrads zeigt,
Fig. 2 eine Schnittfläche A-A durch drei Zähne des Werkzeuges (Schälrads) 10 zeigt,
Fig. 3 eine Darstellung eines aufgerollten Schnittes B-B aus Fig. 1 zeigt,
Fig. 4 eine Fig. 2 entsprechende Darstellung einer weiteren Ausführungsform zeigt,
Fig. 5 eine nochmals weitere Ausführungsform in der Darstellung wie Fig. 2 zeigt,
Fig. 6 eine nochmals weitere Ausführungsform in der Darstellung von Fig. 2 zeigt, und
Fig. 7 eine nochmals andere Ausführungsform in der Darstellung von Fig. 2 zeigt.

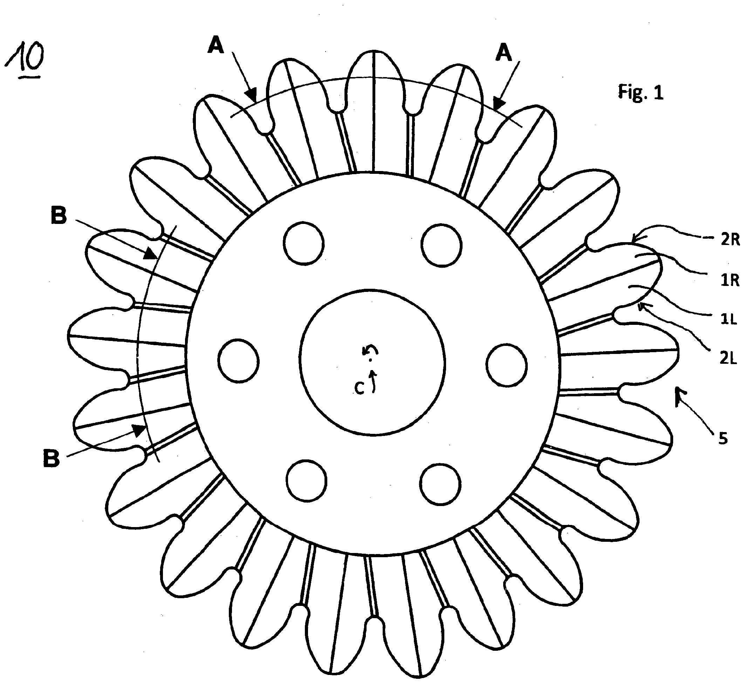

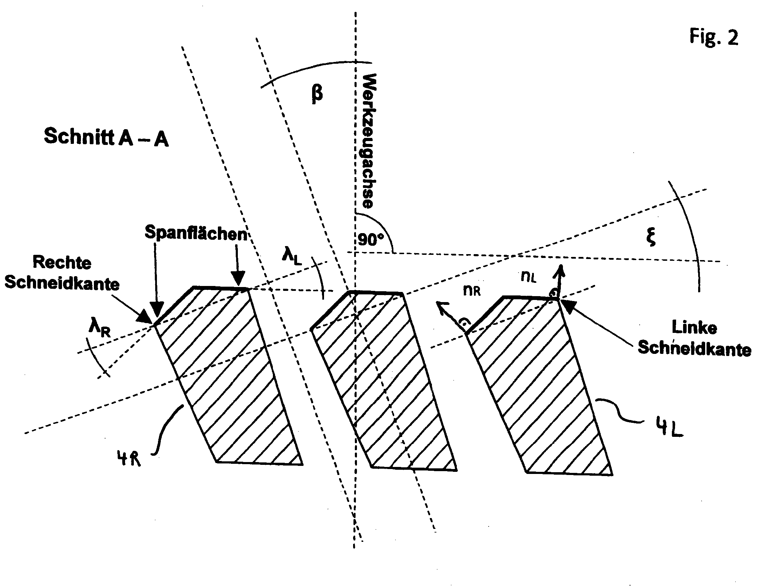

Das in Fig. 1 in Draufsicht auf die Spanflächen dargestellte Schälrad 10 ist beispielsweise aus Voll-Stahl oder Voll-Hartmetall gefertigt. Jeweils in der Mitte der Zähne 5 erkennt man einen Übergang zwischen den Flächen 1R, 1L, die im Schnitt mit den rechten bzw. linken Zahnflanken 4R, 4L (Fig. 2) die Schneidkanten 2R bzw. 2L bilden. Die Drehachse des gezeigten Schälrads 10 verläuft senkrecht zur Papierebene von Fig. 1 und ist mit C bezeichnet.

In Fig. 2 ist zur vereinfachten Darstellung die zylindrische Schnittfläche auf der Bildfläche flach, d.h. abgerollt, dargestellt. Dargestellt ist eine Variante, bei der der Kopfspanwinkel Null beträgt.

Wie aus Fig. 2 zu erkennen ist, handelt es sich um ein links schrägverzahntes Werkzeug mit einem (für die dargestellte Schnittfläche gültigen) Schrägungswinkel β. Die Verbindung zwischen zwei Punkten auf rechter und linker Schneidkante in gleichem radialen Abstand zur Drehachse C verläuft unter einem Winkel ζ zur Orthogonalebene auf die Werkzeugdrehachse (diese Verbindung entspricht der Lage der Spanfläche herkömmlicher Schälräder).

Wie aus Fig. 2 hervorgeht, laufen der Normalenvektor n_{R} auf die Spanfläche 1R an der Schneidkante 2R und der Normalenvektor n_{L} auf die Spanfläche 1L an der Schneidkante 2L auseinander und schließen einen Winkel von ca. 40° ein. Es ergeben sich bei dieser Ausgestaltung vergleichsweise große Keilwinkel an den Schneidkanten.

Des Weiteren sind die Spanflächen 1L, 1R, auch wenn dies aus der Schnittansicht von Fig. 2 alleine nicht erkennbar ist, als ebene Flächen ausgebildet. Zudem liegen die linken Spanflächen 1L auf einer gemeinsamen Ebene, die orthogonal auf der Werkzeugdrehachse C steht. In dieser Konfiguration ist ein Nachschleifen des Schälrads besonders einfach.

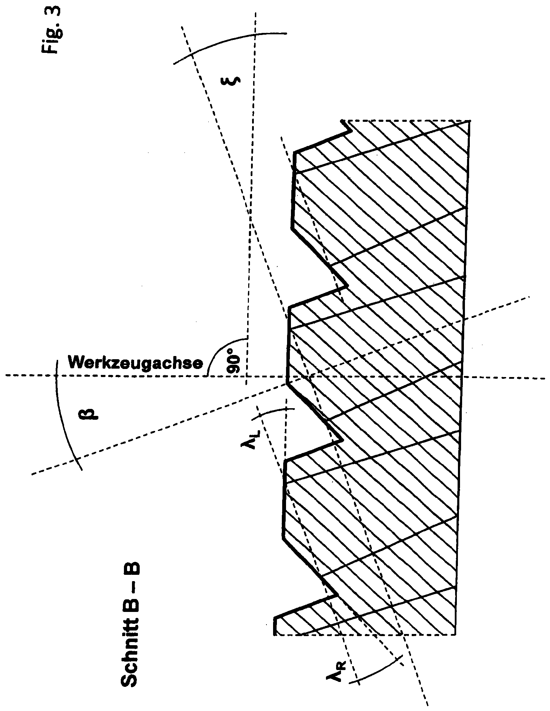

Wie aus Fig. 3 erkennbar ist, wobei Fig. 3 wie Fig. 1 durch einen entsprechenden Schnitt aber unterhalb des Zahnfußbereichs des Schälrads 10 (B-B) hervorgeht, setzen sich die ebenen Flächen 1R, 1L auch über den Fußbereich des Schälrads 10 hinaus in Richtung auf dessen Drehachse fort. Dies erhöht nochmals weiter den beim Nachschärfen verfügbaren Bewegungsraum.

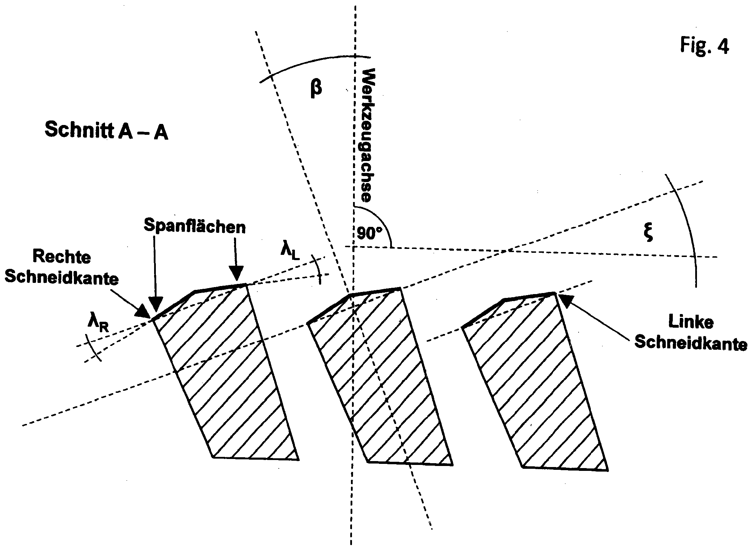

Bei der in Fig. 4 gezeigten Ausführungsform sind die Winkel (λ_{R}, λ_{L}) zwischen der jeweiligen Spanflächenebene und einer direkten Verbindungsgerade zwischen zwei Punkten auf den Schneidkanten gleichen radialen Abstands geringer als bei der in Fig. 2 gezeigten Ausführungsform. Es ergeben sich entsprechend geringere Keilwinkel, die aber weiterhin zu negativen Spanwinkeln führen und die Standzeit des Werkzeugs verbessern.

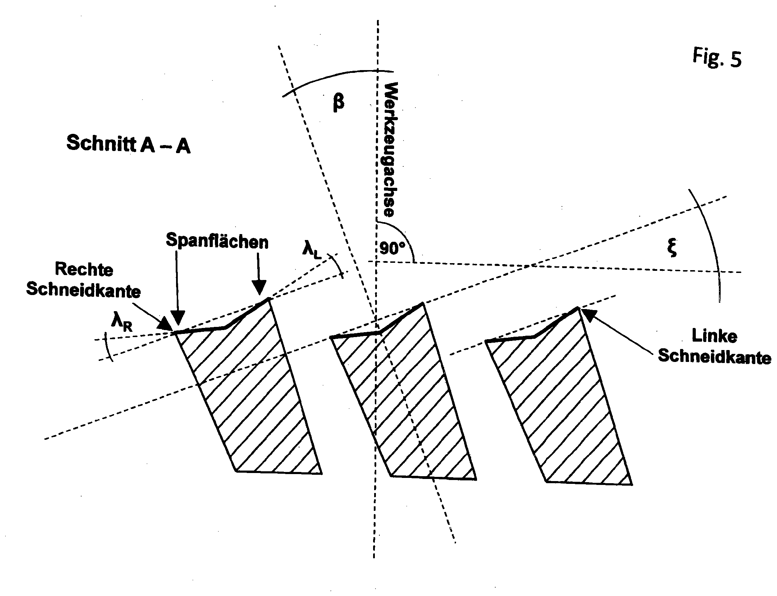

Bei der in Fig. 5 gezeigten Ausführungsform wird von der neuen Flexibilität dahingehend Gebrauch gemacht, dass an beiden Schneidkanten deutlich kleinere Keilwinkel eingestellt werden, insoweit ein für bestimmte Anwendungen gewünschter beidseits positiver Spanwinkel beabsichtigt wird. Dennoch bilden die Spanflächen wiederum jeweils ebene Flächen, und das Nachschärfen kann vergleichsweise einfach erfolgen.

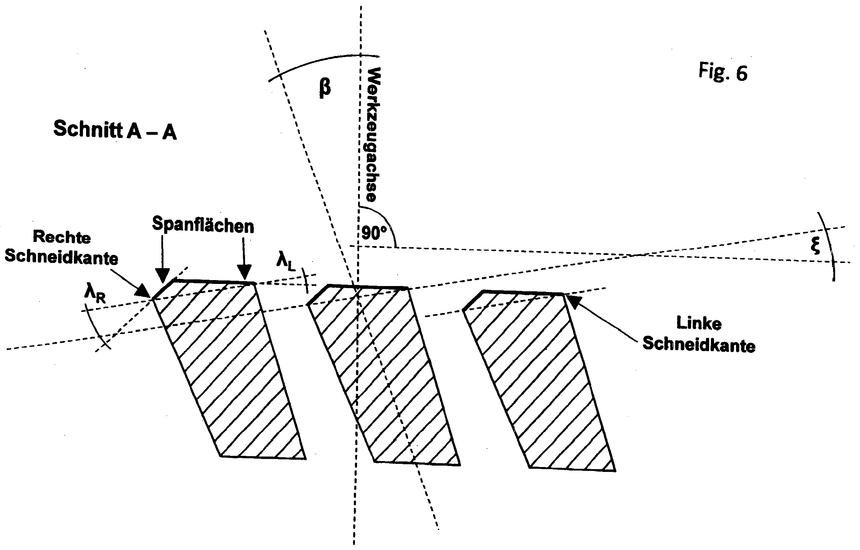

Eine weitere mögliche, in Fig. 6 gezeigte Ausführungsform verdeutlicht, dass abweichend vom in den vorangegangenen Ausführungsformen dargestellten symmetrischen Variante auch unterschiedliche azimutale Erstreckungen der jeweiligen Spanflächen zum Einsatz kommen können, sowie auch (bezogen auf die Orthogonalebene auf die Verbindungsgeraden zwischen zwei Punkten gleichen radialen Abstands) unterschiedlich orientierte Normalenvektoren auf die Spanflächen an beiden Flanken. Bei diesem Ausführungsbeispiel sind wieder Keilwinkel vorgesehen, die zu negativen Spanwinkeln führen.

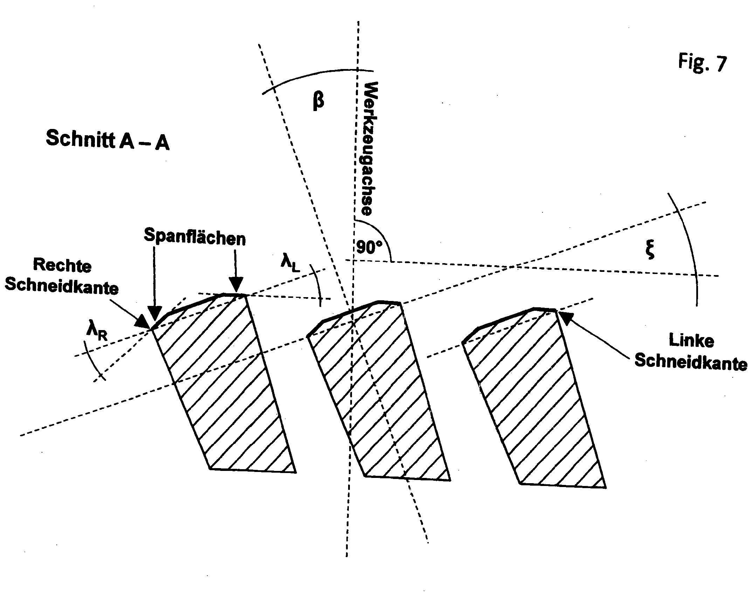

Die in Fig. 7 dargestellte Ausführungsform beleuchtet, dass die ebenen Spanflächen 1L, 1R nicht wie in den vorangegangenen Ausführungsbeispielen gezeigt unmittelbar ineinander übergehen müssen. Vielmehr kommt es auf die genaue Gestaltung eines azimutalen Zwischenbereichs zwischen den beiden Schneidkanten nicht an, insofern diese weder für den Schneidvorgang eine Rolle spielen noch wesentlichen Einfluss auf das Verhalten der vom Werkstück abgenommenen Späne haben. Auch bei der in Fig. 7 dargestellten Ausführungsform bilden die Spanflächen über die radiale Erstreckung der Zahnkante hinweg jeweils eine ebene Fläche und unterscheiden sich somit von einer in einer einzelnen Schnittansicht gleich erscheinenden Gestaltung, bei welcher z.B. zur Bildung der beiden Spanflächen gleichmäßig Material von der Grundform einer gemeinsamen Spanfläche für beide Schneidkanten abgenommen würde. Bei einer derartigen Variante wäre die Spanfläche aufgrund der gekrümmt verlaufenden Zahnflanke ebenfalls gekrümmt und gegenüber den oben erläuterten Ausführungsformen müsste beim Nachschärfen eine Bahn gefahren werden.

Neben den oben erläuterten Varianten des Wälzschälens und Hartschälens ist es auch möglich, Werkzeuge mit der erfindungsgemäßen Struktur im Wälzstoßen einzusetzen, beispielsweise zur Bearbeitung harter oder gehärteter vorverzahnter Werkstücke.

## Patentansprüche

1. Radförmiges Verzahnungswerkzeug (10), insbesondere Schälrad, zur Bearbeitung von Verzahnungen, insbesondere in der Kinematik des Wälzschälverfahrens, mit Schneidzähnen (5), an deren im Bearbeitungsgriff der zu bearbeitenden Verzahnung zugewandten Seite Schneidkanten (2R, 2L) vorgesehen sind,
**dadurch gekennzeichnet, dass** eine erste Schneidkante (2R) eines Schneidzahns durch den Schnitt einer Zahnflanke (4R) des Schneidzahns mit einer zu der Spanfläche dieser ersten Schneidkante gehörenden ersten ebenen Fläche (1R) gebildet ist, deren Normalenvektor (n_{R}) an der ersten Schneidkante (2R) sich in seiner Orientierung von der Orientierung des Normalenvektors (n_{L}) auf eine zweite ebene Fläche (1L) unterscheidet, deren Schnitt mit der anderen Zahnflanke (4L) des Schneidzahns eine zweite Schneidkante (2L) des Schneidzahns bildet und die zu der Spanfläche der zweiten Schneidkante (2L) gehört, wobei der Normalenvektor (n_{L}) auf die zweite Fläche (1L) an der zweiten Schneidkante (2L) im gleichen radialen Abstand von der Drehachse (C) des Verzahnungswerkzeugs ansetzt wie der Normalenvektor (n_{R}) auf die erste Fläche (1R).

2. Verzahnungswerkzeug nach Anspruch 1, bei dem der erste und der zweite Normalenvektor in Richtung auf den Außenraum auseinanderlaufen.

3. Verzahnungswerkzeug nach Anspruch 1 oder 2, bei dem sich die erste und/oder zweite ebene Fläche, insbesondere beide, über einen Zahnfußbereich des Schneidzahns hinaus in Richtung auf die Drehachse des Verzahnungswerkzeugs erstreckt/erstrecken.

4. Verzahnungswerkzeug nach einem der vorhergehenden Ansprüche, bei dem der erste oder der zweite Normalenvektor parallel zu der Drehachse des Verzahnungswerkzeugs verläuft.

5. Verzahnungswerkzeug nach einem der vorhergehenden Ansprüche, bei dem der Kopfspanwinkel des Schneidzahns Null ist.

6. Verzahnungswerkzeug nach einem der vorhergehenden Ansprüche, das schräg verzahnt ist, insbesondere mit einem Betrag des Schrägungswinkels (β) von größer 10°, bevorzugt größer 15° und insbesondere kleiner 30°, bevorzugt kleiner 25°.

7. Verzahnungswerkzeug nach Anspruch 6, bei dem ein Winkel zwischen einer Verbindungsgeraden zwischen einem Punkt der ersten Schneidkante und einem Punkt der zweiten Schneidkante, die den gleichen radialen Abstand von der Drehachse des Verzahnungswerkzeugs haben, zur Normalenebene der Drehachse des Verzahnungswerkzeugs einen Winkel (ε) einschließt, der um weniger als 10°, insbesondere weniger als 5° von dem Schrägungswinkel (β) abweicht, insbesondere gleich dem Schrägungswinkel ist.

8. Verzahnungswerkzeug nach einem der vorhergehenden Ansprüche, das aus VollMaterial, insbesondere Voll-Stahl oder Voll-Hartmetall gebildet ist.

9. Verfahren zur Bearbeitung von Verzahnungen mit einem Verzahnungswerkzeug nach einem der Ansprüche 1 bis 8, insbesondere in der Kinematik des Wälzschälens und insbesondere als Bearbeitung von gehärteten, vorverzahnten Werkstücken.

10. Verfahren zum Nachschärfen eines Verzahnungswerkzeugs nach einem der Ansprüche 1 bis 8, bei dem von der ersten und zweiten ebenen Fläche insbesondere ohne Änderung von deren jeweiligem Normalenvektor Material abgenommen wird, insbesondere durch flächigen Eingriff eines Schleifwerkzeugs.

11. Verzahnungsmaschine zur Bearbeitung von Verzahnungen, mit einer Werkstückaufnahme zur Aufnahme eines Werkstücks für die Verzahnungsbearbeitung und einer drehbar antreibbaren Werkzeugaufnahme, die ein Verzahnungswerkzeug nach einem der Ansprüche 1 bis 8 trägt.

12. Verzahnungsmaschine nach Anspruch 11, mit einer Einmittvorrichtung zur Ermittlung der relativen Drehlage der Werkstückverzahnung.

## Claims

1. A wheel-shaped gear cutting tool (10), in particular a skiving wheel, for machining sets of teeth, in particular in the kinematics of the power skiving method, comprising cutting teeth (5), with cutting edges (2R, 2L) being provided on the side of said cutting teeth which, during machining engagement, faces the set of teeth to be machined,
**characterised in that** a first cutting edge (2R) of a cutting tooth is formed by the intersection of a tooth flank (4R) of the cutting tooth with a first flat surface (1R) belonging to the rake face of said first cutting edge, the normal vector (n_{R}) of said first surface at the first cutting edge (2R) having an orientation different from the orientation of the normal vector (n_{L}) towards a second flat surface (1L), whose intersection with the other tooth flank (4L) of the cutting tooth forms a second cutting edge (2L) of the cutting tooth and which belongs to the rake face of the second cutting edge (2L), wherein the normal vector (n_{L}) towards the second surface (1L) starts at the second cutting edge (2L) at the same radial distance from the axis of rotation (C) of the gear cutting tool as the normal vector (n_{R}) toward the first surface profile (1R).

2. The gear cutting tool according to claim 1, wherein the first and second normal vector diverge towards the outer area.

3. The gear cutting tool according to claim 1 or 2, wherein the first and/or second flat surface, in particular both surfaces, extends/extend beyond a root area of the cutting tooth towards the axis of rotation of the gear cutting tool.

4. The gear cutting tool according to one of the preceding claims, wherein the first or the second normal vector runs parallel to the axis of rotation of the gear cutting tool.

5. The gear cutting tool according to one of the preceding claims, wherein the axial rake angle of the cutting tooth is zero.

6. The gear cutting tool according to one of the preceding claims, which is helically toothed, in particular with a helix angle (β) greater than 10°, preferably greater than 15° and in particular less than 30°, preferably less than 25°.

7. The gear cutting tool according to claim 6, wherein an angle between a straight line connecting a point on the first cutting edge and a point on the second cutting edge, which points are at the same radial distance from the axis of rotation of the gear cutting tool, and the normal plane of the axis of rotation of the gear cutting tool forms an angle (ε) which differs from the helix angle (β) by less than 10°, in particular less than 5°, and in particular is equal to the helix angle.

8. The gear cutting tool according to one of the preceding claims, which is made of a solid material, in particular solid steel or solid carbide.

9. A method for machining teeth with a gear cutting tool according to one of claims 1 to 8, in particular in the kinematics of the power skiving and in particular for machining hardened, rough-machined workpieces.

10. A method for resharpening a gear cutting tool according to one of claims 1 to 8, wherein material is removed from the first and second flat surfaces, in particular without changing their respective normal vector, in particular by means of the plane engagement of a grinding tool.

11. A gear cutting machine for machining gear teeth, comprising a workpiece holding fixture to hold a workpiece for machining gear teeth and a tool holding fixture which can be driven in a rotary manner and holds a gear cutting tool according to one of claims 1 to 8.

12. The gear cutting machine according to claim 11, comprising a centring device to determine the relative rotational position of the workpiece gear teeth.

## Revendications

1. Outil (10) de taillage de type pignon, notamment pignon de décolletage, destiné à l'usinage de dents, notamment dans la cinématique du procédé de power skiving, présentant des dents de coupe (5) dont la face tournée vers la denture à usiner lors du contact d'usinage présente des arêtes de coupe (2R, 2L),
**caractérisé en ce qu'**une première arête coupante (2R) d'une dent de coupe est formée par l'intersection d'un flanc (4R) de la dent de coupe et d'une première surface plane (1R) qui appartient à la face de coupe de cette première arête coupante et dont le vecteur normal (n_{R}) à la première arête coupante (2R) est d'orientation différente de celle du vecteur normal (n_{L}) à une deuxième surface plane (1L) appartenant à la face de coupe de la deuxième arête coupante (2L) et dont l'intersection avec l'autre flanc (4L) de la dent de coupe forme une deuxième arête coupante (2L) de la dent de coupe, ledit vecteur normal (n_{L}) à la deuxième surface (1L) s'appliquant sur la deuxième arête coupante (2L) à la même distance radiale de l'axe de rotation (C) de l'outil de taillage que le vecteur normal (n_{R}) à la première surface (1R).

2. Outil de taillage selon la revendication 1, dans lequel le premier et le deuxième vecteur normal divergent en direction de l'espace extérieur.

3. Outil de taillage selon la revendication 1 ou 2, dans lequel la première et/ou la deuxième surface plane, notamment les deux, s'étendent au-delà de la zone de pied de la dent de coupe en direction de l'axe de rotation de l'outil de taillage.

4. Outil de taillage selon l'une des revendications précédentes, dans lequel le premier ou le deuxième vecteur normal est parallèle à l'axe de rotation de l'outil de taillage.

5. Outil de taillage selon l'une des revendications précédentes, dans lequel l'angle de coupe axial de la dent de coupe est nul.

6. Outil de taillage selon l'une des revendications précédentes, présentant une denture inclinée, l'angle d'inclinaison (β) étant notamment supérieur à 10°, de préférence supérieur à 15° et notamment inférieur à 30°, de préférence inférieur à 25°.

7. Outil de taillage selon la revendication 6, dans lequel un angle formé entre une droite passant par un point de la première arête coupante et un point de la deuxième arête coupante, situés à la même distance radiale de l'axe de rotation de l'outil de taillage, et le plan normal de l'axe de rotation de l'outil de taillage constitue un angle (ε) qui diffère de moins de 10°, notamment de moins de 5° de l'angle d'inclinaison (β), et qui est notamment égal audit angle d'inclinaison.

8. Outil de taillage selon l'une des revendications précédentes, composé de matériau monobloc, notamment d'acier monobloc ou de carbure monobloc.

9. Procédé destiné à l'usinage de dents au moyen d'un outil de taillage selon l'une des revendications 1 à 8, notamment dans la cinématique du power skiving et notamment pour l'usinage de pièces trempées à dents prétaillées.

10. Procédé de dressage d'un outil de taillage selon l'une des revendications 1 à 8, dans lequel de la matière est enlevée de la première et de la deuxième surface plane notamment sans modification de leur vecteur normal respectif, notamment par contact de surface à surface avec un outil de meulage.

11. Machine de taillage destinée à l'usinage de dents, présentant un logement de pièce à usiner servant à recevoir une pièce dont la denture doit être taillée et présentant également un logement d'outil susceptible d'être entraîné en rotation et portant un outil de taillage selon l'une des revendications 1 à 8.

12. Machine de taillage selon la revendication 11, comportant un dispositif de centrage permettant de déterminer la position angulaire relative de la denture de la pièce à usiner.
